Europäisches Patentamt

European Patent Office

Office européen des brevets

(11) Veröffentlichungsnummer: **0 036 414 B1**

(12) **EUROPÄISCHE PATENTSCHRIFT**

(45) Veröffentlichungstag der Patentschrift:
15.02.84

(21) Anmeldenummer: 80901268.5

(22) Anmeldetag: 28.06.80

(86) Internationale Anmeldenummer:
**PCT/EP 80/00038**

(87) Internationale Veröffentlichungsnummer:
**WO 81/01085 (16.04.81 Gazette 81/9)**

(51) Int. Cl.³: **H 02 P 7/62**

�54 **ELEKTRONISCHE STELL- UND REGELEINRICHTUNG.**

(30) Priorität: 04.10.79 DE 2940195

(43) Veröffentlichungstag der Anmeldung:
**30.09.81 Patentblatt 81/39**

(45) Bekanntmachung des Hinweises auf die Patenterteilung:
**15.02.84 Patentblatt 84/7**

(84) Benannte Vertragsstaaten:
**AT CH DE FR GB LI NL**

(56) Entgegenhaltungen:
**CH - A - 485 273
DE - A - 1 588 323
DE - A - 1 588 354
FR - A - 1 309 684
FR - A - 2 126 050**

(73) Patentinhaber: **ROBERT BOSCH GMBH, Postfach 50,
D-7000 Stuttgart 1 (DE)**

(72) Erfinder: **PAULE, Kurt, Lauxweg 19,
D-7000 Stuttgart 75 (DE)**
Erfinder: **SCHÄDLICH, Fritz, Panoramastrasse 4,
D-7022 Leinfelden-Echterdingen (DE)**
Erfinder: **GERSCHNER, Martin,
Wilhelm-Hachtel-Strasse 38,
D-7022 Leinfelden-Echterdingen (DE)**
Erfinder: **HORNUNG, Friedrich, Am Ochsenwald 10A,
D-7000 Stuttgart 80 (DE)**

ACTORUM AG

Elektronische Stell- und Regeleinrichtung

## Stand der Technik

Die Erfindung betrifft eine elektronische Schaltungsanordnung nach der Gattung des Hauptanspruchs. Die Verwendung von Phasenanschnittsteuer- und Regelschaltungen zur Steuerung eines aus einer Wechselspannungsquelle gespeisten Universalmotors sind bereits in vielfacher Form bekannt. Die CH-A-485 273 zeigt und beschreibt beispielsweise eine elektrische Regelschaltung für eine induktive Last, wobei eine Triacsteuerung Verwendung findet. Die Aufladung des Zündkondensators erfolgt dabei über einen Widerstand sowie einen Transformator, durch den eine lastabhängige Regelung des induktiven Verbrauchers ermöglicht wird. In der DE-A-15 88 354 ist ebenfalls ein Drehzahlregelkreis für einen Motor beschrieben, der eine Triacsteuerung aufweist. Auch hier ist ein Transformator vorgesehen, mit dem der Zündkondensator zusätzlich aufladbar ist, so dass Belastungsschwankungen in gewissem Umfang ausregelbar sind. Die DE-A-15 88 323 zeigt eine weitere Schaltung zur Drehzahlregelung eines Universalmotors, bei der mittels eines Transformators der Strom durch den Motor gemessen wird und dieses Stromsignal zur zusätzlichen Aufladung des Zündkondensators verwendet wird. Auch durch diese Schaltung wird erreicht, dass Drehzahlschwankungen bei einer Änderung des Belastungsdrehmoments verringert werden. Die bekannten, belastungsabhängigen Drehzahlregeleinrichtungen haben den Nachteil, dass mit ihnen nur auf unvollständige Art und Weise die Belastungsschwankungen ausgeglichen werden können, da die belastungsabhängige Hilfsspannung nicht in dem wünschenswerten Mass zunimmt, so dass eine vollständige Ausregelung der Belastungsschwankungen möglich ist.

## Vorteile der Erfindung

Die erfindungsgemässe Schaltungsanordnung mit den kennzeichnenden Merkmalen des Hauptanspruchs hat demgegenüber den Vorteil, dass das belastungsabhängige Regelsignal einerseits in der richtigen Phasenlage und andererseits mit ausreichender Amplitude auf den Zündkreis rückgekoppelt ist. Als weiterer Vorteil ist anzusehen, dass das Signal mit einer Belastung des Verbrauchers überproportional zunimmt. Im Hinblick auf geringe Regelabweichungen ist gerade dieser Gesichtspunkt besonders vorteilhaft bei der erfindungsgemässen Regeleinrichtung hervorzuheben Gegenüber der bisherigen Verwendung von induktiven Wandlern in Regelschaltungen wird in der erfindungsgemässen Schaltungsanordnung die Induktivität der Sekundärwicklung des Wandlers ausgenutzt, um mit einer parallelgeschalteten Kapazität einen Schwingkreis zu bilden, dessen Resonanzfrequenz in der Nähe der Netzfrequenz liegt. Der Schwingkreis, der mit ansteigendem Stromflusswinkel des Laststromes zunehmend in Resonanz gerät, wirkt direkt auf den Zündkreis ein.

Trotz des verbesserten Regelverhaltens ist nur ein geringer Aufwand an Bauelementen erforderlich, so dass sich die Einrichtung sowohl platzsparend als auch kostengünstig aufbauen lässt. Durch die geeignete Wahl der Primär- und Sekundärwindungszahl lässt sich in einfacher Weise die Anpassung sowohl an die Last als auch an den Zündkreis (Durchbruchspannung der Triggerdiode) durchführen. Als weiterer Vorteil ist anzusehen, dass sich der Regler als Zweipol an jeder beliebigen Stelle in Reihe mit der Last und der Spannungsquelle schalten lässt.

Durch die in den Unteransprüchen aufgeführten Massnahmen sind weitere vorteilhafte Weiterbildungen und Verbesserungen des im Hauptanspruch angegebenen Reglers möglich. Besonders vorteilhaft ist die Drehzahlstellmöglichkeit durch einen Potentiometer, welches so geschaltet ist, dass gleichzeitig Zündkreis und Schwingkreis beeinflussbar sind.

## Zeichnung

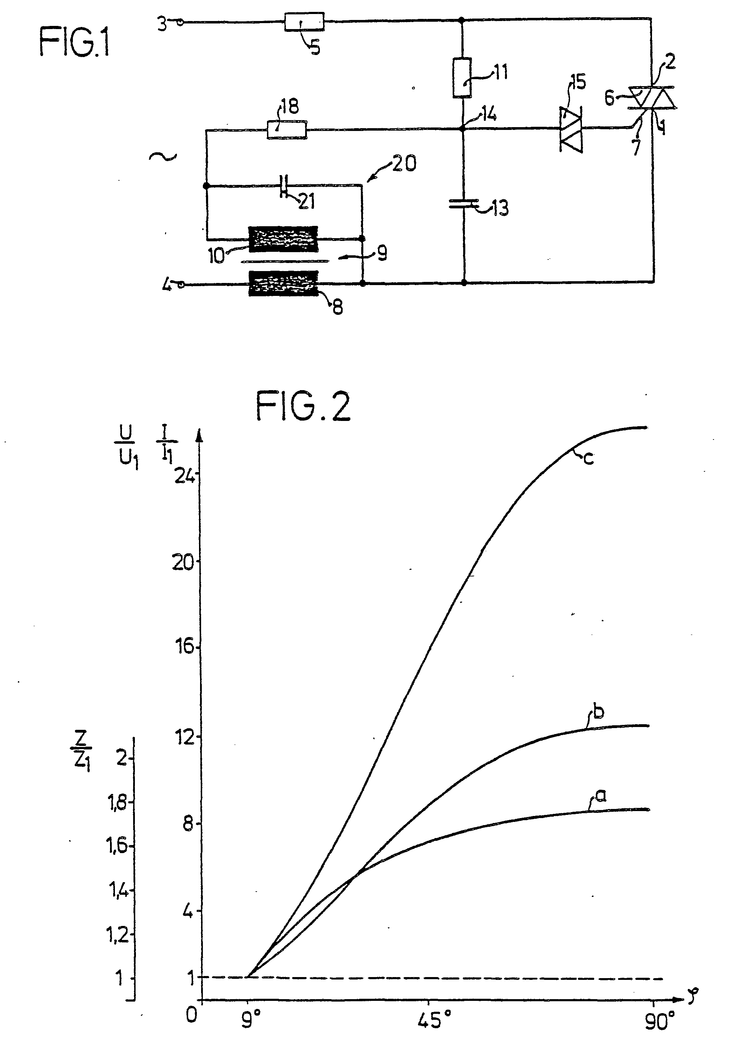

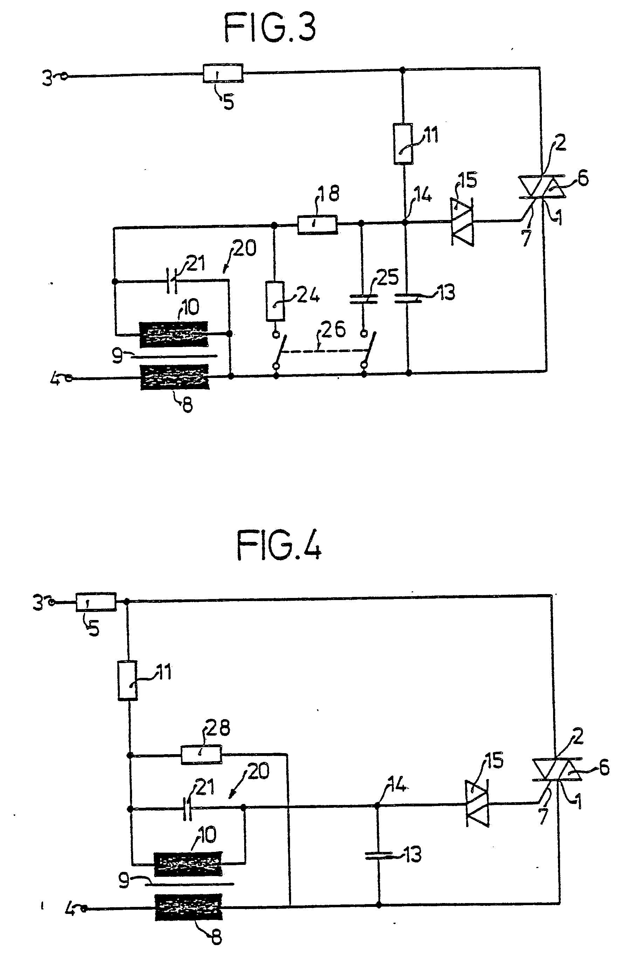

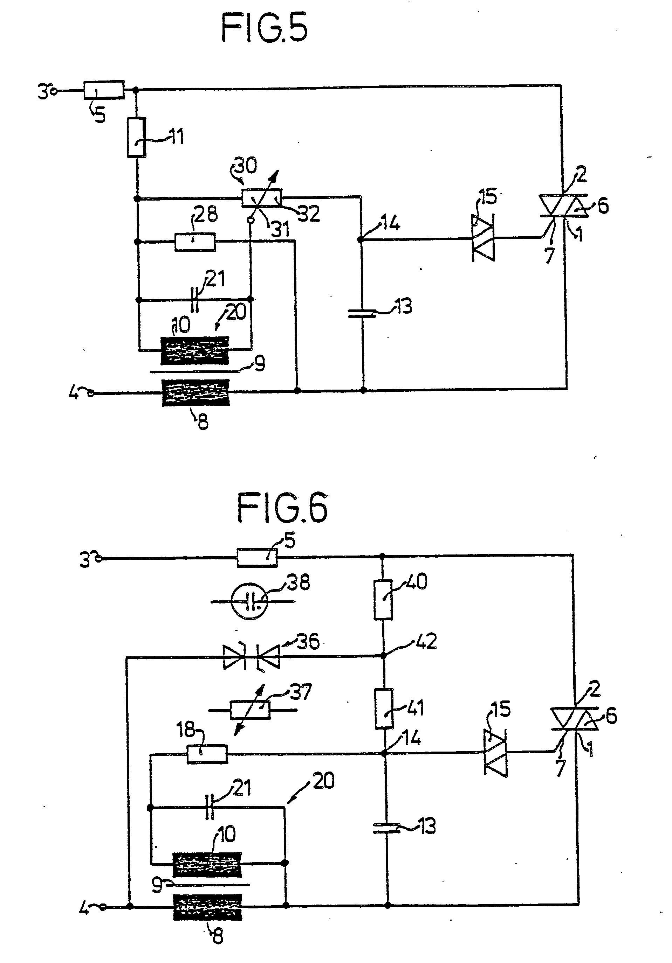

Fünf Ausführungsbeispiele der Erfindung sind in der Zeichnung dargestellt und werden in der nachfolgenden Beschreibung näher erläutert. Figur 1 zeigt das Schema einer Regelschaltung für einen mit Wechselstrom betriebenen Motor in der prinzipiellen Schaltungsausführung, Figur 2 ist ein Diagramm zur Erläuterung der Wirkungsweise der Regelschaltung nach Figur 1, Figur 3 zeigt eine Erweiterung der Regelschaltung nach Figur 1 mit der Möglichkeit der Drehzahlumschaltung. In Figur 4 ist das Schaltbild eines dritten Ausführungsbeispiels dargestellt, Figur 5 zeigt eine Weiterbildung der Schaltung nach Figur 4 mit stufenloser Drehzahlverstellung. Ein weiteres Ausführungsbeispiel ist in Figur 6 dargestellt.

## Beschreibung der Ausführungsbeispiele

In Figur 1 befindet sich zwischen den Klemmen 3 und 4 des Wechselstromspeisenetzes die Serienschaltung eines Universalmotors, eines Triac 6 und der Primärwicklung 8 eines induktiven Strom/Spannungswandlers 9. Parallel zu den Hauptanschlüssen 2, 1 des Triac 6 liegt die Serienschaltung eines Ladewiderstandes 11 und eines Zündkondensators 13, von deren Verbindungspunkt 14 eine Triggerdiode 15 zur Steuerelektrode 7 des Triac 6 führt. Parallel zum Zündkondensator 13 sind in Reihe ein Entkoppelwiderstand 18 und ein Parallelschwingkreis 20, gebildet aus einem Kondensator 21 und der Sekundärwicklung 10 des Strom/Spannungswandlers 9, geschaltet.

Ladewiderstand 11 und Zündkondensator 13 bilden mit Triggerdiode 15 einen an sich bekannten Zündkreis für den Triac 6. Der Zündimpuls wird aus der Netzspannung gewonnen, indem der Zündkondensator 13 über den Widerstand 11 mit Wechselspannung aufgeladen wird, bis der Augenblickswert der Kondensatorspannung am Zündkondensator 13, d.h. die Zeitdauer jeder Halbperiode, bis die Zündspannung von der Triggerdiode 15 erreicht ist und somit der Triac 6 leitend wird, von der Einstellung des Ladewiderstandes 11 abhängig. An diesem lässt sich somit ein bestimmter Wert für die Motordrehzahl vorgeben. Die Besonderheit der in Figur 1 dargestellten Schaltung liegt nun darin, dass der Strom/Spannungswandler 9 zusammen mit dem Kondensator 21 einen charakteristischen Parallelschwingkreis 20 bildet, dessen Resonanzverhalten ausgenutzt wird. Die Sekundärwicklung 10 besitzt eine hohe Windungszahl und stellt die Induktivität des Schwingkreises 20 dar. Dagegen weist die Primärwicklung 8 nur wenige Windungen auf und stellt die Rückkopplungswicklung des Schwingkreises 20 dar. Diese liegt im Lastkreis; der Triac 6 besorgt über den Laststrom allein die Rückführungsverstärkung. Der Schwingkreis 20 ist so ausgelegt, dass seine Resonanzfrequenz das 0,5-1fache der Netzfrequenz beträgt. Nimmt bei zunehmender Belastung des Motors der effektive Strom und über die Rückführung der Stromflusswinkel zu, so ergibt sich im Schwingkreis 20 ein Quasiresonanzeffekt: obwohl die Grundfrequenz (Netzfrequenz) nicht verändert wird, nimmt die Impedanz des Schwingkreises 20 zu und die Schwingkreisspannung steigt gegenüber dem Effektivwert des erregenden Stromes durch die Primärwicklung 8 überproportional an. Dieser Sachverhalt ist in Figur 2 dargestellt. Kurve a zeigt den Verlauf der Impedanz über dem Stromflusswinkel, Kurve b den Erregerstrom durch die Primärwicklung 8, der gleich dem Laststrom ist, und Kurve c die Schwingkreisspannung der Sekundärwicklung 10. Alle Kurven sind auf einen Anfangswert des Stromflusswinkels von $\varphi = 9°$ normiert; dieser Wert entspricht bei einer Netzfrequenz von 50 Hz einem Zeitintervall von 1 ms. Gemäss Figur 2 steigt demnach die Impedanz bei einer Zunahme des Stromflusswinkels auf $\varphi = 90°$ auf das 1,75fache an, während die Schwingkreisspannung rund doppelt so stark wie der dazugehörige erregende Strom zunimmt, obwohl sich die Grundfrequenz nicht ändert. Das resonanzähnliche Verhalten wird allein dadurch erzeugt, dass in Abhängigkeit vom Stromflusswinkel die spektrale Amplitudenverteilung von Grundfrequenz und Oberwellen des angeschnittenen Erregerstromes variiert. Da das Maximum der Schwingkreisspannung gegenüber dem Zündzeitpunkt nacheilt, ist der Zündkreis mit der Schwingkreisspannung in der darauffolgenden Halbwelle steuerbar. Die zunehmende Impedanz bzw. die zunehmende Schwingkreisspannung wirkt über den Entkoppelwiderstand 18 so auf den Zündkreis ein, dass der Zündkondensator 13 mit einem erhöhten oder zusätzlichen netzsynchronen Wechselstrom geladen wird. Dadurch erreicht die Triggerdiode 15 früher ihre Durchbruchspannung, was zu einer Vergrösserung des Stromflusswinkels führt, die der Drehzahlabnahme des Motors entgegenwirkt. Daraus resultiert sofort eine weitere Erhöhung der Impedanz bzw. der Schwingkreisspannung. Durch entsprechende Dimensionierung des Parallelschwingkreises 20 bzw. des Übersetzungsverhältnisses des induktiven Strom/Spannungswandlers 9 erzielt man eine hohe Schleifenverstärkung und damit eine geringe Regelabweichung. Der Widerstand 18 entkoppelt den Schwingkreis 20 vom Zündkreis. Ohne diesen Entkoppelwiderstand 18 würde insbesondere keine erste Zündung stattfinden.

Das in Figur 3 dargestellte zweite Ausführungsbeispiel zeigt gegenüber der prinzipiellen Schaltung gemäss Figur 1 eine drehzahlumschaltbare Schaltungsausführung des Reglers. Im folgenden sind gleiche Bauteile mit denselben Bezugszeichen versehen und werden nicht nochmals beschrieben.

Zur Drehzahlumschaltung ist in an sich bekannter Weise parallel zum Zündkondensator 13 ein weiterer Kondensator 25 schaltbar, der die Zeitkonstante des Zündkreises vergrössert. Dadurch wird die Durchbruchspannung der Triggerdiode 15 später erreicht und damit der Stromflusswinkel reduziert. Die Umschaltung erfolgt über einen zweipoligen Schalter 26, mit dem gleichzeitig ein Widerstand 24 parallel zum Schwingkreis 20 geschaltet wird. Der Widerstand 24 bedämpft den Schwingkreis 20, da bei reduziertem Stromflusswinkel die Schwingkreisspannung, die zur Vollaussteuerung des Zündkreises notwendig ist, erst zu einem späteren Zeitpunkt, d.h. bei höherer Belastung erreicht werden darf. Ohne Widerstand 24 treten Regelschwingungen auf.

Bei dem in Figur 4 gezeigten Ausführungsbeispiel ist parallel zum Triac 6 der Ladewiderstand 11 in Serie mit einem Widerstand 28 geschaltet. Zwischen dem gemeinsamen Anschluss dieser Widerstände und der Steuerelektrode 7 des Triac 6 liegt der Parallelschwingkreis 20 in Serie mit der Triggerdiode 15. Der Zündkondensator 13 liegt wie in Figur 1 zwischen Punkt 14 und einem Hauptanschluss 1 des Triac 6. Last 5, Triac 6 und Primärwicklung 8 sind in Reihe geschaltet und liegen zwischen den Klemmen 3 und 4 des Wechselstromspeisenetzes. Während sich in Figur 1 die vom Wechselstromnetz und vom Schwingkreis 20 kommenden Ströme am Zündkondensator 13 addieren bzw. subtrahieren, erhält man gemäss Figur 4 am Spannungsteiler Ladewiderstand 11 / Widerstand 28 eine Teilspannung aus dem Wechselstromnetz, zu der sich die Spannung des Schwingkreises 20 addiert bzw. subtrahiert. Die übrige Funktion der Schaltung entspricht sonst sinngemäss der nach Figur 1.

Eine in weiteren Grenzen stufenlose Drehzahleinstellung ergibt sich, wenn man die Schaltungsausführung nach Figur 4 durch ein Potentiometer 30 ergänzt, wie in Figur 5 gezeigt ist. Das Potentiometer 30 ist dabei zwischen den gemeinsamen Anschluss von Ladewiderstand 11, Widerstand 28 und Schwingkreis 20 einerseits und Punkt 14 andererseits geschaltet, wobei der Mittelabgriff mit dem anderen Anschluss des Schwingkreises 20 verbunden ist. Dadurch ist die Zeitkonstante des Zündkreises und die Bedämpfung des Schwingkreises 20 gleichzeitig beeinflussbar. In der Potentiometerstellung Teilwiderstand 32 gleich Null bzw. Teilwiderstand 31 gleich Maximum ist die in Figur 5 dargestellte Schaltung identisch mit dem Ausführungsbeispiel nach Figur 4, wenn die minimale Bedämpfung des Schwingkreises 20 durch Teilwiderstand 31 vernachlässigt wird. Diese Position entspricht der höchsten einstellbaren Drehzahl. Verstellt man beispielsweise das Potentiometer 30 so, dass beide Teilwiderstände 31, 32 gleich gross sind, vergrössert sich durch Teilwiderstand 32 die Zeitkonstante des Zündkreises und durch Teilwiderstand 31 die Bedämpfung des Schwingkreises. Diese Einstellung entspricht einer mittleren Drehzahl. In der Potentiometerstellung Teilwiderstand 32 gleich maximal bzw. Teilwiderstand 31 gleich Null ist die Zeitkonstante so gross, dass keine Zündung des Triac 6 mehr stattfindet, der Schwingkreis 20 ist kurzgeschlossen.

Bei dem in Figur 6 dargestellten Ausführungsbeispiel handelt es sich um eine Weiterbildung der Anordnung nach Figur 1. Anstelle des Ladewiderstandes 11 ist die Serienschaltung zweier Widerstände 40, 41 eingesetzt, an deren Verbindungspunkt 42 zwei antiseriell geschaltete Zenerdioden 36 angeschlossen sind, die zu Klemme 4 führen. Die Serienschaltung der Zenerdioden 36 ist auch ersetzbar durch eine Glimmlampe 38 oder einen VDR-Widerstand 37. Durch diese an sich bekannten Stabilisierungsmassnahmen werden Netzspannungsschwankungen, die bei üblichen Phasenanschnittsteuerungen ohnehin, im Falle einer Schaltungsanordnung nach Figur 1 über den Schwingkreis 20 sogar verstärkt auftreten, verringert bzw. beseitigt. Selbstverständlich sind diese zusätzlichen Massnahmen in derselben Weise auch auf die Ausführungsbeispiele gemäss Figur 3, Figur 4 und Figur 5 anwendbar.

## Patentansprüche

1. Elektronische Stell- und Regeleinrichtung für aus einer Wechselspannungsquelle gespeiste Universalmotoren mit einer Phasenanschnittsteuerung, die einen Triac (6) in Reihe zum Universalmotor aufweist, wobei der Triac (6) im Zündkreis einen über einen Ladewiderstand (11) aufladbaren Zündkondensator (13) und im Lastkreis einen induktiven Strom/Spannungswandler (9) enthält, dadurch gekennzeichnet, dass die Sekundärwicklung (10) des induktiven Strom/Spannungswandlers (9) mit einem Kondensator (21) einen Schwingkreis (20) bildet, dessen Resonanzfrequenz auf das 0,5- bis 1fache der Frequenz der Versorgungswechselspannung abgestimmt ist und von dessen vom Stromflusswinkel abhängiger Schwingkreisspannung der Zündkondensator (13) zusätzlich aufladbar ist.

2. Einrichtung nach Anspruch 1, dadurch gekennzeichnet, dass ein Anschluss des Schwingkreises (20) mit dem Hauptanschluss (1) des Triac (6) verbunden ist und dass der andere Anschluss des Schwingkreises (20) über einen Entkoppelwiderstand (18) auf den Verbindungspunkt (14) des Zündkreises zurückführbar ist.

3. Einrichtung nach Anspruch 1, dadurch gekennzeichnet, dass Ladewiderstand (11), Schwingkreis (20) und Zündkondensator (13) eine Reihenschaltung bilden und dass die Schwingkreisspannung über einen Entkoppelwiderstand (28), der parallel zur Reihenschaltung von Schwingkreis (20) und Zündkondensator (13) liegt, auf den Zündkreis zurückführbar ist.

4. Einrichtung nach den Ansprüchen 1 und 3, dadurch gekennzeichnet, dass zur gleichzeitigen Veränderung der Zeitkonstanten des Zündkreises und der Dämpfung des Schwingkreises (20) ein regelbarer Widerstand (31) hinzuschaltbar ist.

5. Einrichtung nach einem der vorhergehenden Ansprüche, dadurch gekennzeichnet, dass zur Drehzahlumschaltung gleichzeitig ein Kondensator (25) parallel zum Zündkondensator (13) und parallel zum Schwingkreis (20) ein Dämpfungswiderstand (24) schaltbar ist.

6. Einrichtung nach einem der vorhergehenden Ansprüche, dadurch gekennzeichnet, dass der Ladewiderstand (11) durch eine Reihenschaltung von zwei Widerständen (40, 41) ersetzbar ist und dass zwischen dem gemeinsamen Anschluss der beiden Widerstände (40, 41) und der Klemme (4) der Versorgungswechselspannung wahlweise zwei entgegengesetzt in Reihe geschaltete Zenerdioden (36), ein VDR-Widerstand (37) oder eine Glimmlampe (38) geschaltet ist.

## Claims

1. An electronic regulating and control device for universal motors provided with a phase-shift control supplied from an a.c. voltage source, which has a Triac (6) in series with the universal motor wherein the Triac (6) includes in the ignition circuit an ignition capacitor (13) chargeable through a charging resistor (11) and in the load circuit an inductive current/voltage converter (9), characterised in that, together with a capacitor (21), the secondary winding (10) of the inductive current/voltage converter (9) forms an oscillatory circuit (20) the resonant frequency of which is tuned to 0.5-1 times the frequency of the a.c. supply voltage and by which the ignition capacitor (13) is chargeable additionally from the oscillatory circuit voltage dependent on the angle of current flow.

2. A device according to claim 1, characterised in that a connection from the oscillatory circuit (10) is connected to the main terminal (1) of the Triac (6) and that the other connection from the oscillatory circuit (20) can be conveyed through a decoupling resistor (18) to the connecting point (14).

3. A device according to claim 1, characterised in that the charging resistor (11), the oscillatory circuit (20) and the ignition capacitor (13) form a series circuit and that the oscillatory circuit voltage can be conveyed to the ignition circuit through a decoupling resistor (28) which is in parallel with the series circuit comprising the oscillatory circuit (20) and the ignition capacitor (13).

4. A device according to claims 1 and 3, characterised in that a variable resistor (31) can be switched in for simultaneously varying the time constant of the ignition circuit and the damping of the oscillatory circuit (20).

5. A device according to one of the preceding claims, characterised in that, for speed changing, a damping resistor (24) can be switched in parallel with the oscillatory circuit (20) and a capacitor (25) can be switched simultaneously in parallel with the ignition capacitor (13).

6. A device according to one of the preceding claims, characterised in that the charging resistor (11) can be replaced by a series circuit comprising two resistors (40, 41) and that two opposed Zener diodes (36) connected in series, a VDR resistor (37) or a glow lamp (38) is switched in selectively between the common connection of the two resistors (40, 41) and the terminal (4) of the a.c. voltage supply.

**Revendications**

1. Installation électronique de réglage et de régulation pour moteurs universels alimentés à partir d'une source de tension alternative, avec une commande par réglage de phase, qui comporte un triac (6) en série avec le moteur universel, le triac (6) comprenant dans le circuit d'allumage un condensateur d'allumage (13) pouvant se charger par l'intermédiaire d'une résistance de charge (11) et dans le circuit de charge un transformateur de courant/tension inductif (9), caractérisée en ce que l'enroulement secondaire (10) du transformateur de courant/tension inductif (9) forme avec un condensateur (21) un circuit oscillant (20), dont la fréquence de résonance est accordée à une valeur de 0,5 à 1 fois la fréquence de la tension alternative d'alimentation et à partir de la tension de circuit oscillant duquel, dépendant de l'angle du flux de courant, le condensateur d'allumage (13) peut se charger additionnellement.

2. Installation selon la revendication 1, caractérisée en ce qu'un raccordement du circuit oscillant (20) est relié au raccordement principal (1) du triac (6), et en ce que l'autre raccordement du circuit oscillant (20) est relié au raccordement principal (1) du triac (6), et en ce que l'autre raccordement du circuit oscillant (20) peut être ramené en liaison avec le point de jonction (14) du circuit d'allumage par l'intermédiaire d'une résistance de découplage (18).

3. Installation selon la revendication 1, caractérisée en ce que la résistance de charge (11), le circuit oscillant (20) et le condensateur d'allumage (13) forment un montage en série, et en ce que la tension du circuit oscillant peut être ramenée en liaison, avec le circuit d'allumage par l'intermédiaire d'une résistance de découplage (28) qui se trouve en parallèle au montage en série du circuit oscillant (20) et du condensateur d'allumage (13).

4. Installation selon les revendications 1 et 3, caractérisée en ce que, pour faire varier simultanément la constante de temps du circuit d'allumage et l'amortissement du circuit oscillant (20), une résistance réglable (31) peut être ajoutée au circuit.

5. Installation selon l'une des revendications précédentes, caractérisée en ce que, pour la commutation concernant la vitesse de rotation, peuvent être commutés en même temps un condensateur (25) en parallèle au condensateur d'allumage (13) et une résistance d'amortissement (24) en parallèle au circuit oscillant (20).

6. Installation selon l'une des revendications précédentes, caractérisée en ce que la résistance de charge (11) peut être remplacée par un montage en série de deux résistances (40, 41), et en ce que, entre le raccordement commun des deux résistances (40, 41) et la borne (4) de la tension alternative d'alimentation, sont mises en circuit au choix deux diodes Zener (36) montées en série en opposition, une varistance (37) ou une lampe à effluves (38).

0 036 414

FIG.1

FIG.2

7

# FIG.3

# FIG.4

# FIG.5

# FIG.6